**Europäisches Patentamt**

**European Patent Office**

**Office européen des brevets**

(19)

(11) Numéro de publication: **0 006 409**
**B1**

(12) **FASCICULE DE BREVET EUROPEEN**

(45) Date de publication du fascicule du brevet: **23.06.82.**

(51) Int. Cl.³: **C 02 F 1/42, B 01 J 47/14**

(21) Numéro de dépôt: **78200060.8**

(22) Date de dépôt: **26.06.78**

(54) **Dispositif de commande de l'alimentation et de l'évacuation d'une colonne, colonne et poste de déminéralisation équipés d'un tel dispositif.**

(43) Date de publication de la demande:
**09.01.80 Bulletin 80/1**

(45) Mention de la délivrance du brevet:
**23.06.82 Bulletin 82/25**

(84) Etats contractants désignés:
**BE CH DE GB LU NL**

(56) Documents cités:
**FR - A - 1 578 371**
**FR - A - 2 199 084**
**US - A - 2 504 816**
**US - A - 3 139 041**
**US - A - 3 169 110**

(73) Titulaire: **Lopez, Fernand**
**27, Rue Emile Barrière**
**F-31200 Toulouse (FR)**

(72) Inventeur: **Lopez, Fernand**
**27, Rue Emile Barrière**
**F-31200 Toulouse (FR)**

(74) Mandataire: **Barre, Philippe**
**93-95, rue des Amidonniers**
**F-31069 Toulouse Cédex (FR)**

Courier Press, Leamington Spa, England.

Dispositif de commande de l'alimentation et de l'évacuation d'une colonne,
colonne et poste de déminéralisation équipés d'un tel dispositif

L'invention concerne un dispositif de commande de l'alimentation et de l'évacuation d'une colonne de traitement d'eau (ou autre liquide); elle vise en particulier les colonnes de déminéralisation contenant des résines échangeuses d'ions, résines cationiques ou résines anioniques, ainsi que les postes de déminéralisation combinant plusieurs colonnes complémentaires.

Notons que, pour rendre la terminologie plus simple, on a parlé ci-après d'eau comme liquide à traiter; il est bien entendu qu'il faut étendre cette désignation à tout liquide, quelle que soit sa nature (alcool, huiles, etc...).

On sait que les postes de déminéralisation sont en général composés de deux colonnes disposées en série l'une après l'autre, l'une contenant une résine cationique, l'autre une résine anionique. L'eau du réseau de distribution traverse les deux colonnes où sont retenus les sels en solution et sort traitée, prête à l'utilisation. Au cours des périodes de traitement, les résines échangeuses d'ions s'épuisent peu à peu et doivent être régénérées suivant un cycle de régénération comprenant le plus souvent un décolmatage par passage d'eau à contre-courant, la régénération proprement dite par passage d'un régénérant (acide chlorydrique dilué pour les résines cationiques et solution de soude pour les résines anioniques), et un rinçage par passage d'eau; au cours du régime de régénération, l'eau cu les effluents sortant des colonnes sont envoyés à l'égoût.

Les postes de déminéralisation connus jusqu'à ce jour sont, ainsi, équipés d'un ensemble complexe de canalisations pour permettre d'assurer les différents régimes de circulation dans les colonnes correspondant au régime de service ou aux diverses phases du régime de régénération; ces canalisations sont piquées sur les colonnes et sont associées à une pluralité de vannes manuelles: l'opérateur manoeuvre en général plusieurs vannes dans le sens de la fermeture et plusieurs vannes dans le sens de l'ouverture pour établir tel ou tel régime. Par exemple, les postes de déminéralisation les plus répandus à deux colonnes de traitement comprennent 13 vannes et pour passer du régime de service à la première phase du régime de régénération (phase de décolmatage), l'opérateur doit effectuer 5 manoeuvres et 26 manoeuvres au total pour une régénération complète.

On conçoit que, dans ces conditions, la commande de ces postes soit complexe et demeure soumise à des risques d'erreurs fréquentes, ces risques étant d'autant plus forts que la fréquence des régénérations est relativement élevée (une fois par semaine environ). Par ailleurs, les piquages des diverses canalisations sur les colonnes, habituellement en matière synthétique armée de fibres de verre (polyester ou autre), réduisent notablement la résistance mécanique des colonnes et déterminent des risques importants de fissuration de celles-ci.

La présente invention se propose de pallier les défauts des colonnes ou postes de déminéralisation classiques et de fournir un dispositif de commande de l'alimentation et de l'évacuation de chaque colonne, apte à assurer de façon appropriée l'entrée et la sortie de l'eau ou d'un régénérant aussi bien en régime de service (traitement de l'eau qui est distribuée vers l'utilisation) qu'en régime de régénération (régénération des résines ou, de façon plus générale, du matériau de traitement contenu dans la colonne).

Un objectif de l'invention est, en particulier, de simplifier de façon considérable les manoeuvres à effectuer, en éliminant tout risque d'erreur.

Un autre objectif est de supprimer tous les piquages sur la colonne pour ne laisser subsister qu'une entrée et une sortie, situées en tête de celle-ci au niveau de l'orifice supérieur que comporte la colonne à l'issue de sa fabrication; notons que les termes d'"entrée" et de "sortie" utilisés évoquent le sens de circulation de l'eau en régime de service, mais sont pris dans un sens plus large, indépendant du sens de circulation pour certaines phases du recyclage (en particulier pour la phase de décolmatage où, comme on le verra, l'eau circule à contre-courant par rapport au sens normal et pénètre dans la colonne par la "sortie" et sort par l'"entrée").

Le dispositif conforme à l'invention destiné à assurer la commande de l'alimentation et de l'évacuation d'une colonne de traitement d'eau comprend essentiellement une vanne de distribution centralisée, des moyens de commande de celle-ci et un hydro-injecteur alimenté en eau pour aspirer un régénérant; selon la présente invention, la vanne de distribution comprend au moins trois chambres intérieures:

une chambre, dite chambre de distribution d'eau, dans laquelle débouche une lumière $Ee$ d'entrée d'eau à traiter et de laquelle s'échappe une sortie $Sh$ d'alimentation en eau de l'hydro-injecteur,
une deuxième chambre, dite chambre d'inversion de sens, dans laquelle débouchent, d'une part, une lulière $Er$ d'entrée du régénérant communiquant avec l'hydroinjecteur, d'autre part, des lumières $C_1$ et $C_2$ communiquant respectivement avec l'entrée et la sortie de la colonne pour assurer le passage de l'eau ou du régénérant entre la vanne et ladite colonne dans un sens ou dans l'autre,
une troisième chambre, dite chambre de sortie, de laquelle s'échappent une lumière $Se$

d'eau traitée et une lumière Sr d'évacuation vers l'égoût.

La chambre de distribution est agencée pour communiquer avec la chambre d'inversion de sens et contient un piston mobile entre deux positions, l'une $PE_1$ dans laquelle le passage de l'eau s'effectue depuis la lumière Ee d'entrée vers la chambre d'inversion, l'autre $PE_2$ dans laquelle ce passage s'effectue vers la sortie Sh.

La chambre d'inversion est agencée pour communiquer avec la chambre de sortie et contient un piston mobile entre deux positions, l'une $PI_1$ dans laquelle le passage s'effectue, d'une part, depuis la chambre de distribution d'eau ou depuis la lumière Er d'entrée du régénérant vers la lumière $C_1$ communiquant avec l'entrée de la colonne, d'autre part, depuis la lumière $C_2$ communiquant avec la sortie de celle-ci vers la chambre de sortie, l'autre $PI_2$ dans laquelle le passage s'effectue, d'une part, depuis la chambre de distribution d'eau ou depuis la lumière Er d'entrée du régénérant vers la lumière $C_2$, d'autre part, depuis la lumière $C_1$ vers la chambre de sortie.

La chambre de sortie contient également un piston mobile entre deux positions, l'une $PS_1$ dans laquelle le passage s'effectue depuis la chambre d'inversion de sens vers la lumière Se de sortie d'eau traitée, l'autre $PS_2$ dans laquelle le passage s'effectue depuis cette chambre d'inversion de sens vers la lumière Sr d'évacuation vers l'égoût.

Ainsi, les pistons peuvent être disposés dans des positions qui, en se combinant, donnent plusieurs configurations, assurant chacune dans la vanne et dans la colonne de traitement une circulation appropriée à une phase donnée.

En particulier, les moyens de commande de la vanne de distribution sont adaptés pour déplacer les trois pistons sus-évoqués en vue de les disposer respectivement dans les configurations suivantes:

— $PE_1$, $PI_1$, $PS_1$ correspondant à une configuration dite de service,
— $PE_1$, $PI_2$, $PS_2$ correspondant à une configuration dite de décolmatage,
— $PE_2$, $PI_1$ ou $PI_2$, $PS_2$ correspondant à une ou des configurations dites de régénération,
— $PE_1$, $PI_1$, $PS_2$ correspondant à une configuration dite de rinçage.

La configuration dite de service correspond au régime normal ou de service où l'eau du réseau à traiter pénètre par la lumière Ee d'entrée, s'écoule par la lumière $C_1$ vers l'entrée de la colonne, traverse celle-ci pour y subir son traitement, est dirigée à travers la lumière $C_2$ et sort de la vanne par la lumière Se de sortie connectée au conduit d'utilisation.

La configuration dite de décolmatage correspond à une phase du régime de régénération (phase préalable) pendant laquelle l'eau du réseau est admise dans la colonne par la

lumière $C_2$, traverse celle-ci à contre-courant (sens de circulation opposé au sens normal en régime de service) et est rejetée vers l'égoût par la lumière d'évacuation Sr.

La ou les configurations, dites de régénération, correspondent aux phases de régénération proprement dites, pendant lesquelles le régénérant est admis dans la colonne, traverse celle-ci et est rejeté à l'égoût.

La configuration dite de rinçage correspond à une phase du régime de régénération (phase finale) pendant laquelle l'eau du réseau est admise dans la colonne, traverse celle-ci à co-courant (sens normal de circulation en régime de service) et est rejetée à l'égoût.

Dans la plupart des applications, le dispositif de commande peut être prévu pour que ses pistons mobiles présentent une configuration de régénération dite de régénération à co-courant ($PE_2$, $PI_1$, $PS_2$), dans laquelle la lumière Er communique avec la lumière $C_1$ et la lumière $C_2$ communique avec la lumière Sr. Cette configuration correspond à un passage du régénérant à co-courant (sens normal de circulation de l'eau dans la colonne en régime de service), et éventuellement comme on le verra, à un rinçage lent à co-courant lorsque la quantité de régénérant prévue est épuisée.

Pour d'autres applications, une configuration de régénération différente, dite de régénération à contre-courant, peut être prévue ($PE_2$, $PI_2$, $PS_2$) dans laquelle la lumière Er communique avec la lumière $C_2$, et la lumière $C_1$ communique avec la lumière Sr. Cette configuration correspond à un passage du régénérant à contre-courant (sens de circulation opposé au sens normal en régime de service) et éventuellement à un rinçage lent à contre-courant. Cette régénération est souhaitable dans certains cas, en particulier pour permettre une économie de régénérant.

Par ailleurs, selon un mode de réalisation très avantageux du dispositif, la vanne de distribution centralisée se présente sous la forme d'un ensemble compact, pourvu d'un col doté de moyens de fixation lui permettant de se fixer en tête de la colonne de traitement; ce col est percé des lumières $C_1$ et $C_2$ déjà évoquées, lesquelles sont équipées d'ajutages appropriés pour s'accoupler de façon étanche respectivement avec l'entrée et avec la sortie de la colonne. Dans ce mode de réalisation, cette sortie de la colonne est ramenée en tête de celle-ci par un conduit ascendant prévu à l'intérieur et sur toute la hauteur de ladite colonne.

La vanne de distribution peut en particulier être composée de trois corps contenant chacun une chambre et son piston, à savoir, un corps central disposé sensiblement verticalement au-dessus de la colonne et comportant le col précité et ses ajutages qui servent à accoupler la vanne sur la colonne, et deux corps latéraux, disposés horizontalement suivant deux directions radiales par rapport au corps central et assemblés à celui-ci.

L-hydro-injecteur associé à la vanne peut comprendre un venturi et être assemblé sur le corps central de la vanne suivant une direction radiale par rapport à ce dernier, pour former avec ladite vanne un ensemble compact.

Par ailleurs, les moyens de commande qui permettent de disposer les pistons dans telle ou telle configuration peuvent être de nature diverse: moyens mécaniques adaptés pour mouvoir de façon adaptée ces pistons, moyens hydrauliques, moyens électriques, moyens pneumatiques, etc.

Selon un mode de réalisation préféré, ces moyens de commande sont hydrauliques et comprennent un distributeur hydraulique à plusieurs · sorties, adapté pour distribuer la pression d'eau dans les chambres de la vanne en vue de déplacer les pistons mobiles contenus dans celles-ci et les mettre dans la configuration voulue. Ce distributeur peut en particulier comporter plusieurs pistons obturateurs disposés radialement par rapport à un arbre à câmes central: selon la position angulaire de l'arbre à câmes, chaque piston obture une sortie du distributeur ou, au contraire, la dégage et la met en communication avec une prise de pression d'eau, de sorte que la chambre correspondante de la vanne de distribution est ou non mise en pression.

L'arbre à câmes sus-évoqué peut être solidaire d'un organe de manoeuvre manuel; un opérateur le fait alors tourner manuellement d'une position à la suivante pour passer d'une phase à l'autre. Chaque phase est ainsi conditionnée sans aucune erreur de répartition possible par une seule manoeuvre. Les diverses positions angulaires successives de l'arbre à câmes correspondent, de préférence, aux phases qui doivent s'accomplir successivement et la manoeuvre de l'opérateur se réduit au début de chaque phase à une rotation d'une fraction de tour de l'arbre à câmes, sans risque d'interversion des phases.

L'arbre à câmes peut également être associé à des moyens d'entrainement en rotation (moteur électrique ou autre) asservis à un programmateur permettant de faire tourner cet arbre de façon automatique d'une position à la suivante, à la fin de chaque phase. On obtient ainsi un dispositif entièrement automatique, apte à commander le déroulement d'un cycle de régénération pour revenir au terme de celui-ci au régime de service, sans aucune intervention humaine. Ce programmateur peut comprendre des moyens de temporisation qui fixent une durée à chaque phase et déclenchent la suivante au terme de cette durée; ce programmateur peut également être associé à une horloge pour déclencher le déroulement d'un cycle de régénération au bout d'un certain temps d'utilisation, de sorte que la commande devient entièrement automatique et n'exige aucune intervention.

Selon un autre mode de réalisation le programmateur peut être associé à des capteurs, implantés dans la vanne de distribution et aptes à détecter la fin d'une phase par mesure d'un paramètre, en vue de déclencher la phase suivante. Par exemple les cycles de régénération peuvent être déclenchés en mesurant la résistivité de l'eau traitée et en générant une impulsion électrique de commande lorsque cette résistivité passe audessous d'un seuil déterminé.

Notons par ailleurs que le distributeur hydraulique associé à la vanne de distribution peut être réuni en un ensemble compact avec cette vanne ou au contraire, être séparé de celle-ci et disposé sur une console située à proximité de la colonne de traitement ou à une distance déterminée de celle-ci selon l'application.

La présente invention qui a pour objet direct un dispositif de commande de l'alimentation et de l'évacuation d'une colonne, s'étend bien entendu à toute colonne de traitement d'eau équipée d'un tel dispositif et à tout poste de traitement combinant plusieurs colonnes équipées chacune d'un tel dispositif; en particulier elle vise une colonne de déminéralisation contenant des résines échangeuses d'ions, ainsi qu'un poste de déminéralisation comprenant au moins deux colonnes, l'une contenant une résine cationique, l'autre une résine anionique; chaque colonne est équipée d'un dispositif de commande conforme à l'invention: la lumière Ee d'entrée d'eau d'un dispositif est connectée au réseau d'eau à traiter, cependant que la lumière Se de sortie d'eau de ce dispositif est connectée à la lumière E'e d'entrée d'eau de l'autre dispositif et que la lumière S'e de sortie d'eau de ce dernier dispositif est connectée à une canalisation d'utilisation.

L'invention ayant été exposée dans sa forme générale, d'autres caractéristiques, buts et avantages se dégageront de la description qui suit, en regard des dessins annexés, lesquels sont donnés à titre d'exemples non limitatifs; sur ces dessins qui font partie intégrante de la présente description:

— la figure 1 présente, en perspective schématique, un poste de déminéralisation conforme à l'invention,
— la figure 2 est une coupe partielle, par un plan vertical aa, d'une vanne de distribution équipant chaque colonne de ce poste,
— la figure 3 est une coupe partielle de cette vanne, par un plan vertical bb orthogonal au premier,
— la figure 4 est une coupe par un plan axial cc d'un distributeur hydraulique associé à chaque vanne de distribution,
— la figure 5 est une coupe transversale selon une ligne brisée dd, de ce distributeur hydraulique,
— les figures 6a, 6b, 6c et 6d sont des schémas illustrant le fonctionnement du dispositif,

— la figure 7 est un schéma complémentaire illustrant le fonctionnement d'une variante du dispositif, adaptée pour un cycle de régénération légèrement modifié.

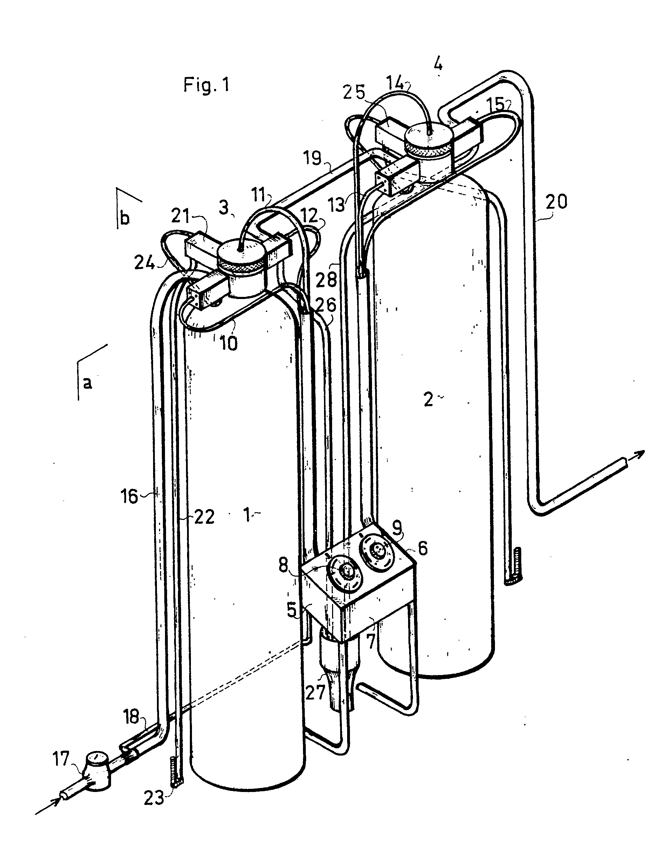

Le poste de déminéralisation représenté à titre d'exemple à la figure 1 comprend essentiellement:

. une colonne de traitement 1 contenant une résine échangeuse d'ions cationiques,

. une colonne de traitement 2 contenant une résine échangeuse d'ions anioniques,

. une vanne de distribution 3 vissée en partie haute de la colonne 1 pour alimenter celle-ci en eau ou en régénérant, en l'occurence de l'acide chlorydrique dilué, et pour aiguiller cette eau ou ce régénérant à leur sortie après passage dans la colonne,

. une vanne de distribution 4 de structure analogue à la première, vissée en partie haute de la colonne 2 dans le même but (le régénérant étant constitué dans ce cas par une solution de soude),

. deux distributeurs hydrauliques 5 et 6 disposés sur une console 7 à proximité des colonnes, chaque distributeur étant en l'exemple pourvu d'un organe de manoeuvre manuel que l'on aperçoit en 8 ou en 9 à la figure 1 et ayant pour fonction de commander respectivement chaque vanne (vanne 3 pour le distributeur 5 et vanne 4 pour le distributeur 6),

. trois conduits 10, 11 et 12 ou 13, 14 et 15 reliant chaque distributeur 5 ou 6 à sa vanne 3 ou 4 (en l'exemple représenté à la figure 1, ces conduits sont gainés sur une partie de leur parcours),

. un conduit 16 d'arrivée d'eau à traiter vers la vanne 3, connecté au réseau de distribution d'eau, notamment par l'entremise d'un détendeur 17,

. une prise de pression hydraulique 18 pour alimenter les deux distributeurs 5 et 6 et permettre la commande des vannes,

. un conduit 19 reliant les vannes 3 et 4, de sorte que, après passage dans la colonne 1, l'eau vienne traverser la colonne 2 qui, en service, est ainsi placée en série après la première colonne,

. un conduit 20 de sortie de l'eau traitée vers les postes d'utilisation après passage dans les deux colonnes,

. un hydro-injecteur 21 assemblé sur la vanne 3 pour alimenter celle-ci en régénérant: cet hydro-injecteur aspire le régénérant par un conduit 22 terminé par une crépine 23 munie d'un clapet de fermeture se fermant en l'absence de régénérant, cette crépine étant appelée à plonger dans un bac de régénérant (non représenté); l'hydro-injecteur 21 est en outre alimenté par un conduit 24 relié à la vanne 3, en eau motrice, en vue de créer une dépression hydraulique d'aspiration,

. un hydroinjecteur 25 analogue au précédent et assemblé sur la vanne 4 pour alimenter celle-ci en régénérant,

. enfin, un conduit d'évacuation 26 connecté à la vanne 3 et débouchant dans un collecteur d'égoût 27, et un conduit d'évacuation analogue 28 connecté à la vanne 4 et débouchant dans ce collecteur.

La figure 1 montre un agencement possible des divers moyens ci-dessus décrits; les colonnes ne comportent acun piquage et sont simplement accouplées par leur partie supérieure à la vanne correspondante 3 ou 4.

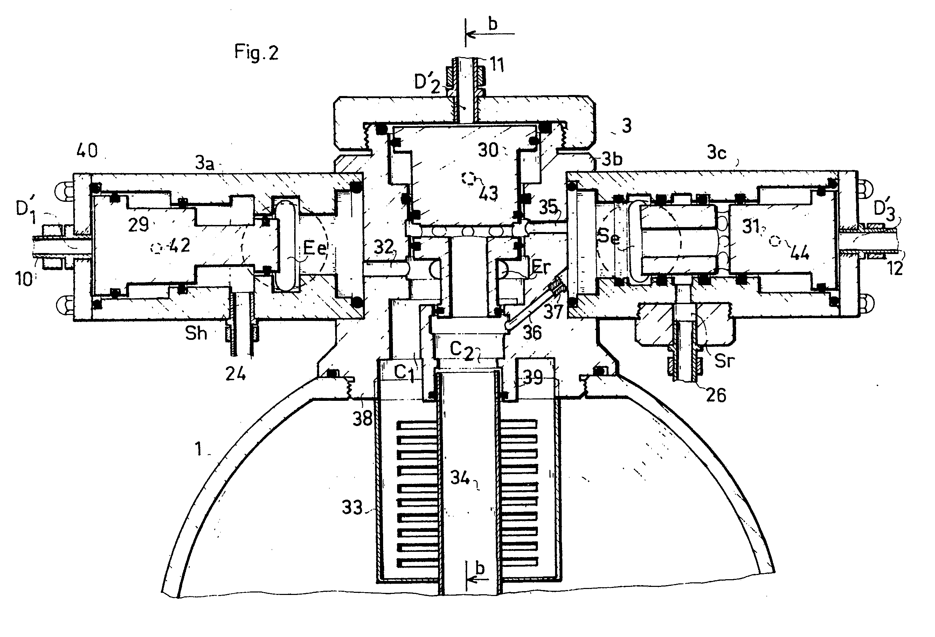

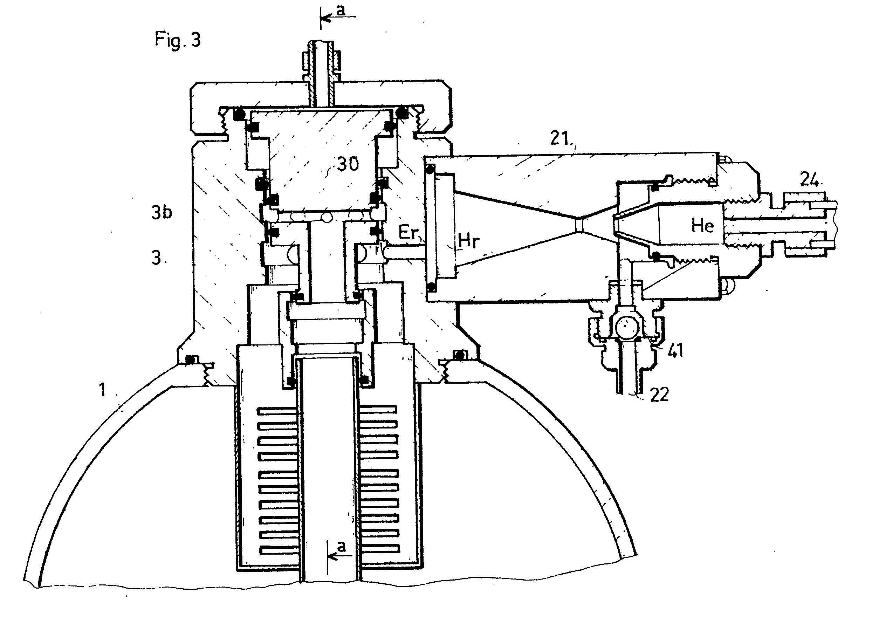

La figures 2 et 3 représentent, en coupes de détail, une vanne de distribution et son hydro-injecteur, par exemple la vanne 3 et son hydro-injecteur 21.

Cette vanne comprend trois chambres intérieures, l'une dite chambre de distribution d'eau, contenant un piston 29 mobile entre deux positions (désignées par la suite respectivement par $PE_1$ et $PE_2$), une deuxième chambre, dite chambre d'inversion de sens, contenant un piston 30 mobile entre deux positions (désignées par $PI_1$ et $PI_2$), enfin une troisième chambre, dite chambre de sortie, contenant un piston 31 mobile entre deux positions (désignées par $PS_1$ et $PS_2$).

Le conduit 16 d'arrivée d'eau débouche dans la chambre de distribution d'eau par une lumière Ee d'entrée d'eau cependant que le conduit 24 d'alimentation en eau de l'hydro-injecteur 21 s'échappe de cette chambre par une sortie Sh et débouche dans l'hydro-injecteur par une entrée d'eau motrice He; la chambre de distribution d'eau est en outre agencée pour communiquer par une lumière 32 avec la chambre d'inversion de sens.

Cette chambre d'inversion de sens et pourvue d'une lumière Er d'entrée du régénérant, qui communique avec une sortie Hr de l'hydro-injecteur, par laquelle s'échappe le régénérant dilué; de plus, cette chambre d'inversion de sens communique par une lumière $C_1$ avec l'entrée de la colonne 1 par une lumière $C_2$ avec la sortie de celle-ci. L'entrée de la colonne est en l'exemple de forme annulaire et est pourvue d'une crépine 33 qui retient les grains de résine; la sortie de la colonne est constituée par l'orifice supérieur d'un conduit ascendant 34 disposé selon l'axe de la colonne.

La chambre d'inversion de sens ci-dessus évoquée est en outre agencée pour communiquer avec la chambre de sortie, en l'exemple par une lumière 35 et par un perçage 36 doté d'une douille à orifice calibré 37 dont on comprendra la fonction plus loin.

Enfin le conduit 19 de sortie d'eau de la vanne 1 s'échappe de la chambre de sortie par une lumière Se de sortie d'eau, cependant que le conduit d'évacuation 26 s'échappe de cette chambre par une lumière Sr d'évacuation.

Comme le montrent les figures 2 et 3 chaque chambre comporte une entrée de commande hydraulique $D'_1$, $D'_2$ ou $D'_3$ à laquelle aboutit un des conduits 10, 11 ou 12 qui la relie au distributeur hydraulique 5. Ces entrées $D'_1$, $D'_2$ ou $D'_3$ sont disposées en bout de la chambre correspondante en vue d'appliquer la pression d'eau sur une face du piston 29, 30 ou 31 contenu dans ladite chambre; chacun de ces pistons est agencé de sorte que la pression de l'eau à traiter ou du régénérant qui traverse la vanne, s'applique sur une face opposée dudit piston de surface plus faible: ainsi le retour du piston est assuré par cette eau ou ce régénérant lorsque la pression motrice est interrompue à l'entrée de commande (en l'absence de tout ressort ou autre moyen mécanique).

En l'exemple décrit, la vanne 3 est composée de trois corps 3a, 3b et 3c contenant chacun une chambre et son piston et percés des lumières décrites précédemment. Le corps 3b est disposé verticalement en position centrale et comporte un col fileté 38 avec joint d'étanchéité, qui permet d'assujettir la vanne sur la colonne 1 par vissage dans l'orifice supérieur de celle-ci, taraudé à cet effet. Ce col est pourvu, selon son axe, d'un ajutage 39 avec joint d'étanchéité que délimite la lumière $C_2$ et vient coopérer avec l'extrémité supérieure du conduit 34.

Les corps 3a et 3c sont disposés radialement par rapport au corps central 3b et sont assemblés sur ce dernier à l'opposé l'un de l'autre, en particulier au moyen de colonnettes et d'écrous de serrage qui les maintiennent contre celui-ci; l'étanchéité est assurée par compression de joints toriques.

Chaque corps 3a, 3b ou 3c est fermé à l'extrémité de sa chambre par un couvercle tel que 40 qui est traversé par l'entrée de commande hydraulique $D'_1$, $D'_2$ ou $D'_3$.

L-hydro-injecteur 21 est assemblé à l'arrière de la vanne sur le corps central 3b suivant une direction radiale par rapport à celui-ci comme le montre la figure 3, la sortie Hr de cet hydro-injecteur venant en regard de la lumière Er d'entrée du régénérant que comporte ce corps central. Cet hydro-injecteur est formé par un Venturi alimenté en eau motrice par son entrée He (reliée comme déjà indiqué à la sortie Sh de la chambre de distribution d'eau de la vanne) et pourvu d'une section rétrécie au voisinage de laquelle débouche le conduit 22 d'aspiration du régénérant concentré; un clapet anti-retour à bille 41 supprime tout risque de refoulement vers le conduit 22. Ainsi pendant la phase de régénération le régénérant dilué s'écoule par la sortie Hr jusqu'à épuisement de la dose; il se produit alors un rinçage lent par l'eau qui traverse l'hydro-injecteur.

Par ailleurs, comme le représente la figure 2 les pistons 29, 30 et 31 sont associés à plusieurs joints d'étanchéité toriques et conformés (avec des lumières internes pour les pistons 30 et 31) de sorte que leurs positions respectives $PE_1$ ou $PE_2$, $PI_1$ ou $PI_2$, $PS_1$ ou $PS_2$ conditionnent les mises en communication ou obturations suivantes:

— position $PE_1$ du piston 29 de la chambre de distribution d'eau (position schématisée à la figure 2): le passage de l'eau s'effectue depuis la lumière Ee d'entrée vers la chambre d'inversion par la lumière 32, la sortie Sh d'alimentation en eau de l'hydro-injecteur étant obturée;

— position opposée $PE_2$ du piston 29, obtenue en mettant la chambre en pression à travers l'entrée de commande hydraulique $D'_1$ (un évent 42 assure l'évacuation de l'air): le passage de l'eau s'effectue alors vers la sortie Sh, la chambre d'inversion de sens n'étant plus alimentée à travers la lumière 32;

— position $PI_1$ du piston 30 de la chambre d'inversion de sens (position schématisée à la figure 2): le passage s'effectue, d'une part, depuis la chambre de distribution d'eau (par la lumière 32) ou depuis la lumière Er d'entrée du régénérant vers la lumière $C_1$ communiquant avec l'entrée de la colonne, d'autre part, depuis la lumière $C_2$ communiquant avec la sortie de celle-ci vers la chambre de sortie par la lumière 35 et le perçage 36; la lumière 35 n'étant pas finement calibrée, ce passage s'effectue à débit élevé;

— position opposée $PI_2$ du piston 30, obtenue en mettant la chambre en pression à travers l'entrée de commande hydraulique $D'_2$ (un évent 43 assure l'évacuation de l'air): le passage s'effectue en sens inverse, c'est-à-dire, d'une part, depuis la chambre de distribution d'eau ou depuis la lumière Er d'entrée du régénérant (à travers les lumières internes du piston 30) vers la lumière $C_2$, d'autre part, depuis la lumière $C_1$ vers la chambre de sortie à travers le perçage calibré 36; ce dernier passage s'effectue à faible débit;

— position $PS_1$ du piston 31 de la chambre de sortie (position schématisée à la figure 2): le passage s'effectue depuis la chambre d'inversion de sens vers la lumière Se de sortie d'eau traitée, la lumière Sr d'évacuation vers l'égoût étant obturée;

— position opposée $PS_2$ du piston 31, obtenue en mettant la chambre en pression à travers l'entrée de commande hydraulique $D'_3$ (un évent 44 assure l'évacuation de l'air): le passage s'effectue alors depuis la chambre d'inversion de sens vers la lumière Sr d'évacuation vers l'égoût, la lumière Se étant obturée.

Dans ces conditions on conçoit qu'il est facile en commandant de façon appropriée la mise en pression des chambres par les entrées $D'_1$ $D'_2$ et $D'_3$ de déplacer les pistons en fonction du régime ou du cycle désiré pour les disposer dans une des 8 configurations possibles, la configuration $PE_1$, $PI_1$, $PS_1$ correspondant à la configuration de service en période d'utilisation normale.

Cette commande des pistons est assurée par le distributeur hydraulique 5 qu'en l'exemple est monté sur la console 7 pour le mettre à la portée d'un opérateur; ce distributeur pourrait également être assemblé sur la vanne correspondante pour former un ensemble compact, notamment dans le cas déjà mentionné où il est actionné par un programmateur automatique.

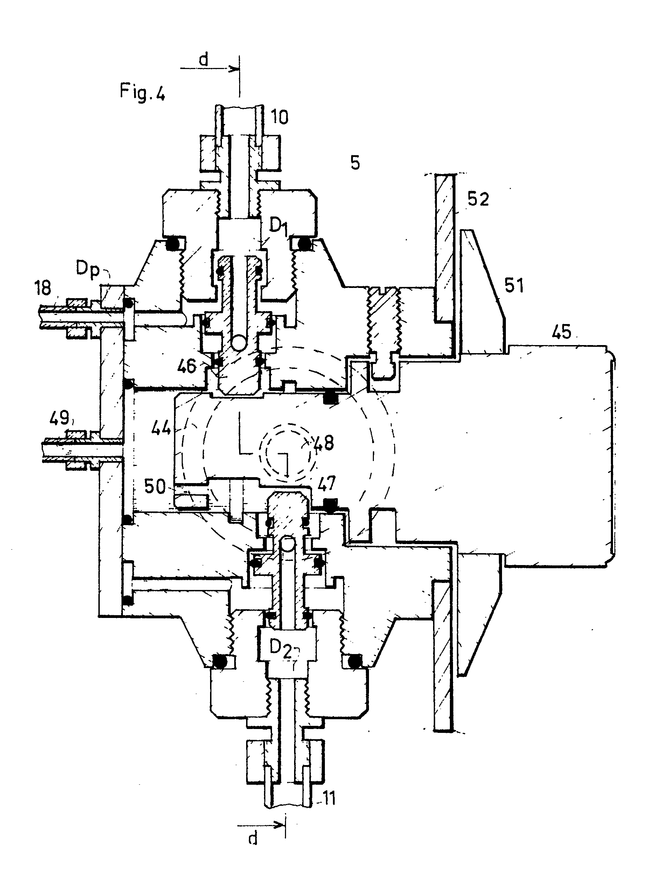

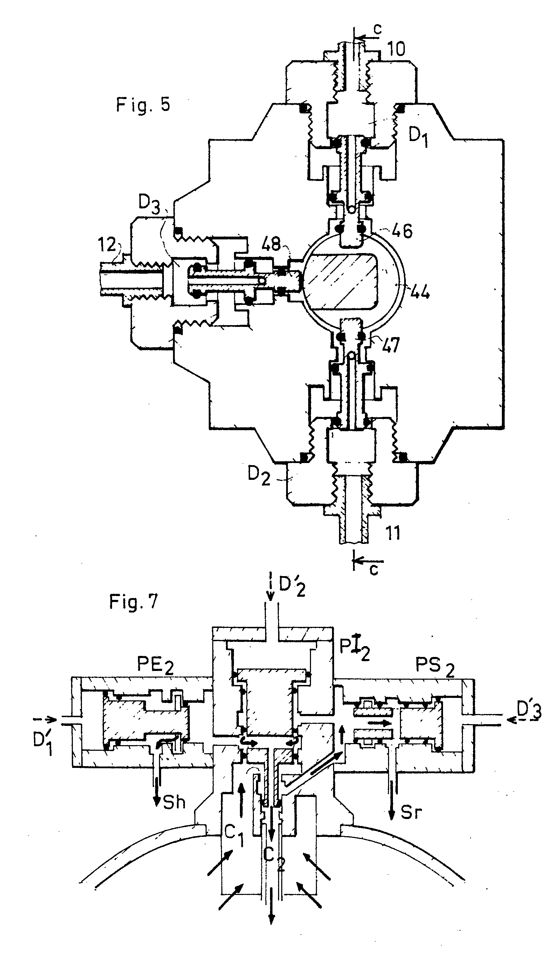

Les figures 4 et 5 présentent respectivement en coupe cc et en coupe dd, un mode de réalisation du distributeur hydraulique 5.

Celui-ci est formé par un corps percé axialement pour loger un arbre à câmes tournant 44, qui se prolonge par un bouton de manoeuvre 45; ce corps comprend trois chambres radiales qui contiennent chacune un piston obturateur 46, 47 et 48 disposé radialement par rapport à l'arbre à câmes 44. Chaque piston obturateur vient en appui avec l'arbre à câmes de sorte que, selon la position angulaire de celui-ci, il obture une sortie $D_1$, $D_2$ ou $D_3$ ou, au contraire, la dégage et la met en communication avec une prise de pression d'eau Dp reliée à la prise de pression hydraulique 18 qui alimente le distributeur.

Les trois sorties $D_1$, $D_2$ et $D_3$ sont respectivement connectées aux entrées de commande hydraulique de la vanne $D'_1$, $D'_2$ et $D'_3$. En l'exemple une sortie de vidange 49 est prévue pour permettre l'évacuation vers l'égoût de l'eau résiduelle lorsqu'une chambre de la vanne n'est plus mise sous pression c'est-à-dire lorsque le piston obturateur correspondant est disposé dans la position où il obture l'arrivée d'eau vers cette chambre.

Dans le mode de réalisation représenté aux figures 4 et 5, les pistons obturateurs sont agencés pour être appliqués contre les câmes de l'arbre 44 par la pression d'eau admise par la prise Dp, de sorte que soit supprimé tout ressort ou autre organe mécanique. En outre la vidange sus-évoquée s'effectue par un canal interne dont est percé chaque piston, canal qui, lorsque le piston n'est pas repoussé par une câme (position du piston 47 à la figure 4), débouche dans le logement axial de l'arbre à câmes et communique avec la sortie de vidange 49 par un perçage 50 de cet arbre.

On se reportera aux figures 4 et 5 pour toute précision complémentaire sur les détails d'agencement des pistons obturateurs et de leurs joints d'étanchéité.

En l'exemple le bouton 45 porte une couronne 51 qui tourne en face d'une plaque 52; cette couronne et cette plaque permettent de repérer les diverses positions angulaires de l'arbre à câmes qui correspondent aux diverses phases (régime de service ou phases du régime de régénération).

Dans le cas d'un régime de régénération à trois phases (décolmatage, régénération à co-courant et rinçage), l'arbre à câmes 44 est adapté pour posséder 4 positions angulaires successives conditionnant quatre configurations différentes des trois pistons obturateurs 46, 47 et 48; cet arbre possède à cet effet sur sa périphérie quatre plages s'étendant chacune sur 90° et pourvues de câmes appropriées pour repousser ces pistons ou au contraire les libérer.

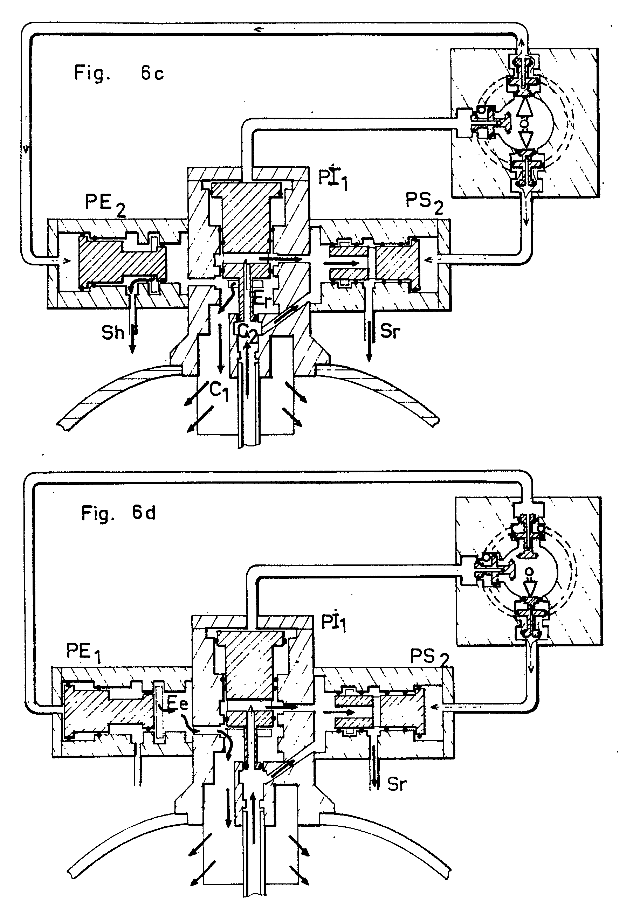

Le schéma de la figure 6a montre la vanne 3 et son distributeur 5 pour une des positions angulaires de l'arbre à câmes correspondant au régime de service; les trois pistons obturateurs du distributeur ne sont pas repoussés par cet arbre à câmes (absence de bossage au niveau des trois pistons pour cette plage angulaire) et occupent une position centripède sous la pression de l'eau d'alimentation. Dans cette position ils obturent le passage de l'eau sous pression vers les sorties $D_1$, $D_2$ et $D_3$ qui sont, au contraire, mises en communication avec la sortie de vidange 49. Les pistons 29, 30 et 31 de la vanne sont ainsi disposés dans la configuration de service $PE_1$, $PI_1$, $PS_1$; on a représenté par des flèches les sens d'écoulement de l'eau.

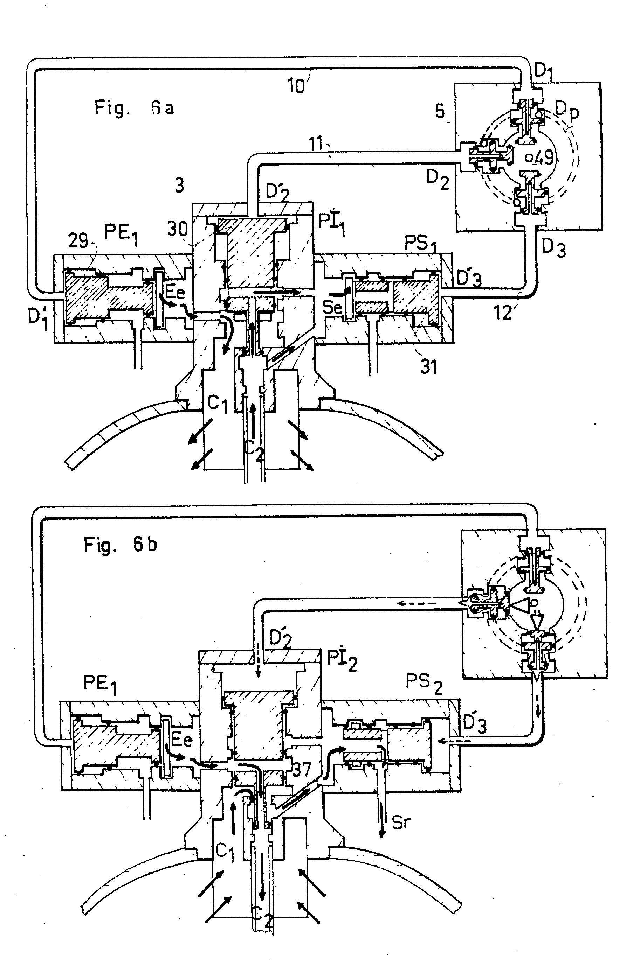

Lorsqu'on fait subir une rotation d'un quart de tour à l'arbre à câmes 44, on dispose le distributeur et la vanne dans la position schématisée à la figure 6b qui correspond à la phase de décolmatage; les câmes de l'arbre ont repoussé deux pistons obturateurs (action symbolisée par des flèches), de sorte que la chambre d'inversion de sens et la chambre de sortie sont mises sous pression par leur entrée $D'_2$ et $D'_3$. Les pistons de la vanne sont ainsi disposés dans la configuration de décolmatage $PE_1$, $PI_2$, $PS_2$; l'eau parcourt la colonne à contre-courant, effectue un décolmatage ou détassage de la résine et est rejetée à l'égoût. Comme cela est préférable pour cette opération, le débit de décolmatage est faible puisque le passage entre la chambre d'inversion de sens et la chambre de sortie s'effectue par l'orifice calibré 37; ce débit peut être réglé selon l'application en ajustant la section de cet orifice.

Une nouvelle rotation d'un quart de tour de l'arbre 44 dispose le distributeur et la vanne dans la position schématisée à la figure 6c, qui correspond à une phase de régénération à co-courant; les pistons de la vanne sont disposés dans la configuration $PE_2$, $PI_1$, $PS_2$; l'hydro-injecteur est alimenté en eau par la sortie Sh de la chambre de distribution d'eau et le régénérant dilué entre dans la chambre d'inversion de sens par la lumière Er. Le régénérant parcourt la colonne dans le sens normal et est rejeté à l'égoût; lorsque la dose est épuisée, l'eau motrice qui alimente l'hydro-injecteur continue à parcourir la colonne et effectue un pré-rinçage à faible débit.

Une nouvelle rotation d'un quart de tour dispose le distributeur et la vanne dans la position schématisée à la figure 6d, qui correspond à la phase de rinçage (rinçage rapide); les pistons de la vanne sont disposés dans la configuration $PE_1$, $PI_1$, $PS_2$; l'eau entrant par la lumière Ee parcourt la colonne à co-courant et est rejetée à l'égoût.

Une nouvelle rotation d'un quart de tour remet la vanne et le distributeur dans leur position de service.

On conçoit l'intérêt d'un tel dispositif qui réduit les manoeuvres à leur plus simple expression, élimine toute possibilité d'erreur, et supprime tout piquage sur la colonne.

Notons que la vanne et le distributeur sont de préférence, réalisés en matière synthétique, notamment en P.V.C. de sorte qu'aucune pièce métallique ne se trouve au contact des liquides (l'eau déminéralisée et les régénérants étant très corrosifs à l'égard des métaux ferreux).

Par une simple adaptation du distributeur il est possible de modifier le cycle de régénération. Selon une variante du dispositif précédent, ce distributeur est adapté pour conditionner les 4 configurations suivantes des trois pistons obturateurs: les configurations schématisées aux figures 6a, 6b et 6d et une configuration dans laquelle les trois entrées de commande de la vanne sont alimentées; les pistons de la vanne sont dans ce dernier cas commandés pour se disposer dans la configuration schématisée à la figure 7: $PE_2$, $PI_2$, $PS_2$, dans cette configuration dite de régénération à contre-courant, le régénérant circule dans la colonne à contre-courant et à faible débit avant d'être rejeté à l'égoût. On peut ainsi dans certains cas réaliser une régénération plus rentable de la résine.

Dans un poste de déminéralisation à deux colonnes ou plus, la régénération de la résine est effectuée successivement, en partant de la première colonne qui est remise en position de service à la fin de son cycle de régénération, jusqu'à la dernière colonne.

Il faut noter que, en régime de régénération, la sortie Se d'eau traitée est obturée, ce qui représente un avantage sur le plan de la sécurité d'utilisation. Un autre avantage du dispositif ci-dessus décrit, qui est essentiel sur le plan de la fiabilité, réside dans le fait que ce dispositif ne fait appel à aucune source de puissance autre qu'hydraulique, de sorte qu'il n'est pas assujetti à des pannes de source énergétique telle que source de tension, source d'air comprimé, etc.

### Revendications

1—Dispositif de commande de l'alimentation et de l'évacuation d'une colonne de traitement d'eau ou autre liquide, en particulier colonne de déminéralisation contenant des résines échangeuses d'ions, ce dispositif comprenant une vanne de distribution centralisée se présentant sous la forme d'un ensemble compact fixé en tête de la colonne, des moyens de commande de ladite vanne et un hydro-injecteur alimenté en eau pour aspirer un régénérant, ledit dispositif ayant pour fonction d'assurer de façon appropriée l'entrée et la sortie de l'eau ou du régénérant aussi bien en régime de service qu'en régime de régénération, et étant caractérisé en ce que la vanne de distribution comprend trois chambres intérieures:

. une chambre, dite chambre de distribution d'eau, dans laquelle débouche une lumière Ee d'entrée d'eau à traiter et de laquelle s'échappe une sortie Sh d'alimentation en eau de l'hydro-injecteur,

. une deuxième chambre, dite chambre d'inversion de sens dans laquelle débouchent, d'une part une lumière Er d'entrée du régénérant communiquant avec l'hydro-injecteur, d'autre part, des lumières $C_1$ et $C_2$ communiquant respectivement avec l'entrée et la sortie de la colonne pour assurer le passage de l'eau ou du régénérant entre la vanne et ladite colonne dans un sens ou dans l'autre,

. une troisième chambre, dite chambre de sortie, de laquelle s'échappent une lumière Se d'eau traitée et une lumière Sr d'évacuation vers l'égoût,

. la chambre de distribution d'eau étant agencée pour communiquer avec la chambre d'inversion de sens et contenant un piston mobile entre deux positions, l'une $PE_1$ dans laquelle le passage de l'eau s'effectue depuis la lumière Ee d'entrée vers la chambre d'inversion, l'autre $PE_2$ dans laquelle ce passage s'effectue vers la sortie Sh,

. la chambre d'inversion étant agencée pour communiquer avec la chambre de sortie et contenant un piston mobile entre deux positions, l'une $PI_1$ dans laquelle le passage s'effectue, d'une part, depuis la chambre de distribution d'eau ou depuis la lumière Er d'entrée du régénérant vers la lumière $C_1$ communiquant avec l'entrée de la colonne, d'autre part, depuis la lumière $C_2$ communiquant avec la sortie de celle-ci vers la chambre de sortie, l'autre $PI_2$ dans laquelle le passage s'effectue, d'une part, depuis la chambre de distribution d'eau ou depuis la lumière Er d'entrée du régénérant vers la lumière $C_2$, d'autre part, depuis la lumière $C_1$ vers la chambre de sortie,

. la chambre de sortie contenant un piston mobile entre deux positions, l'une $PS_1$ dans laquelle le passage s'effectue depuis la chambre d'inversion de sens vers la lumière Se de sortie d'eau traitée, l'autre $PS_2$ dans laquelle le passage s'effectue depuis cette chambre d'inversion de sens la lumière Sr d'évacuation vers l'égoût.

2—Dispositif selon la revendication 1, caractérisé en ce que les moyens de commande de la vanne de distribution sont adaptés pour déplacer les trois pistons sus-évoqués et les disposer respectivement dans les configurations suivantes:

— $PE_1$, $PI_1$, $PS_1$ correspondant à une configuration dite de service,

— $PE_1$, $PI_2$, $PS_2$ correspondant à une configuration dite de décolmatage,

— $PE_2$, $PI_1$ ou $PI_2$, $PS_2$ correspondant à une ou des configurations dites de régénération,

— $PE_1$, $PI_1$, $PS_2$ correspondant à une configuration dite de rinçage.

3—Dispositif selon l'une des revendications 1 ou 2, caractérisé en ce que la vanne de distribution est composée de trois corps contenant chacun une chambre et son piston, les trois corps comprenant un corps central disposé sensiblement verticalement au-dessus de la colonne et comportant un col et des ajustages pour être accouplé sur la colonne, et deux corps latéraux disposés horizontalement suivant deux directions radiales par rapport au corps central et assemblés à celui-ci.

4—Dispositif selon la revendication 3, caractérisé en ce que l'hydro-injecteur est assemblé sur le corps central de la vanne suivant une direction radiale par rapport à celui-ci, cet hydro-injecteur étant pourvu d'une sortie Hr du régénérant dilué, disposé en regard de la lumière Er d'entrée du régénérant que comporte ce corps central, et d'une entrée d'eau motrice He, connectée par un conduit à la sortie Sh d'un corps latéral.

5—Dispositif selon l'une des revendications 1, 2, 3 ou 4, caractérisé en ce que les moyens de commande de la vanne de distribution comprennent un distributeur hydraulique à plusieurs sorties, adapté pour distribuer la pression d'eau dans les chambres de la vanne, ledit distributeur hydraulique comprenant trois pistons obturateurs disposés radialement par rapport à un arbre à câmes central, chaque piston-obturateur étant adapté, selon la position angulaire de l'arbre à câmes, pour obturer une sortie $D_1$, $D_2$ ou $D_3$ ou, au contraire, la dégager et la mettre en communication avec une prise de pression d'eau, les trois sorties $D_1$, $D_2$, $D_3$ correspondant respectivement aux trois pistons obturateurs étant respectivement connectés à des entrées de commande hydraulique D'1, D'2, D'3 prévues dans les trois chambres de la vanne pour entraîner les pistons contenus dans celle-ci.

6—Dispositif selon la revendication 5, caractérisé en ce que les entrées de commande hydraulique D'1, D'2, D'3 de la vanne sont disposées en bout des chambres correspondantes en vue d'appliquer la pression d'eau sur une face de chacun des pistons correspondants, chacun de ces pistons étant agencé de sorte que la pression de l'eau à traiter ou du régénérant qui traverse la vanne, s'applique sur une face opposée dudit piston de surface plus faible en vue d'assurer le retour de celui-ci lorsque la pression est interrompue à l'entrée de commande correspondante D'1, D'2, D'3.

7—Dispositif selon les revendications 2 et 6 prises ensemble, caractérisé en ce que l'arbre à câmes du distributeur hydraulique est adapté pour posséder 4 positions angulaires successives, conditionnant 4 configurations des trois pistons-obturateurs dudit distributeur, ces pistons-obturateurs étant agencés de sorte que dans leurs quatre configurations, ils commandent les pistons de la vanne pour les disposer respectivement dans les 4 configurations suivantes: configuration de service $PE_1$, $PI_1$, $PS_1$, configuration de décolmatage $PE_1$, $PI_2$, $PS_2$, configuration dite de régénération à co-courant $PE_2$, $PI_1$, $PS_2$, et configuration de rinçage $PE_1$, $PI_1$, $PS_2$.

8—Dispositif selon les revendications 2 et 6 prises ensemble, caractérisé en ce que l'arbre à câmes du distributeur hydraulique est adapté pour posséder 4 positions angulaires successives, conditionnant 4 configurations des trois pistons-obturateurs dudit distributeur, ces pistons-obturateurs étant agencés de sorte que dans leurs quatre configurations ils commandent les pistons de la vanne pour les disposer respectivement dans les 4 configurations suivantes: configuration de service $PE_1$, $PI_1$, $PS_1$, configuration de décolmatage $PE_1$, $PI_2$, $PS_2$, configuration dite de régénération à contre-courant, $PE_2$, $PI_2$, $PS_2$, et configuration de rinçage $PE_1$, $PI_1$, $PS_2$.

9—Dispositif selon l'une des revendications 5, 6, 7 ou 8, caractérisé en ce que l'arbre à câmes est solidaire d'un organe de manoeuvre manuel permettant de la faire tourner manuellement d'une position à la suivante.

10—Dispositif selon l'une des revendications 5, 6, 7, 8 ou 9, caractérisé en ce que le distributeur hydraulique est disposé sur une console rattachée à la colonne de traitement.

11—Poste de déminéralisation d'eau comprenant au moins deux colonnes, l'une contenant une résine cationique, l'autre une résine anionique, caractérisé en ce que chaque colonne est équipée d'un dispositif de commande conforme à l'une des revendications 1, 2, 3, 4, 5, 6, 7, 8, 9 ou 10, la lumière E d'entrée d'eau d'un dispositif étant connectée au réseau d'eau à traiter, cependant que la lumière Se de sortie d'eau de ce dispositif est connectée à la lumière E'e d'entrée d'eau de l'autre dispositif et que la lumière S'e de sortie d'eau de ce dernier est connectée à une canalisation d'utilisation.

**Claims**

1. Device to control the feeding and the evacuation of a column for water or other liquid processing, particularly a column containing ions exchanging resins for eliminating minerals, this device comprising a central supply-gate having the form of a compact unit fixed at the head of the column, control means for this supply-gate and a water feeded hydro-injector to suck up a regenerative product so as to ensure the inlet and the outlet of the water or the regenerative product in a suitable way by normal working conditions as well as by regenerative conditions, the device being characterised by:

— a chamber, so called water-distribution chamber, in which clears an inlet port Ee for the water to be processed and an exhaust port Sh for the water feeding of the hydro-injector,

— a second chamber, so called changed-over chamber, in which clear, on the one hand an inlet port Er for the regenerative product communicating with the hydro-injector, and on the other hand ports C1 and C2 respectively communicating with the inlet and the outlet of the column so as to ensure the flow of the water or the regenerative product between the supply-gate and the column in a way or the other,

— a third chamber, so called exhaust chamber, in which clear an exhaust port Se for processed water and an exhaust port Sr towards the sewer,

— the water distribution chamber being arranged to communicate with the change-over chamber and containing a plunger movable between two positions, one PE1 permitting the flow of water from the inlet port Ee towards the change-over chamber, the other PE2 permitting the flow of water towards the exhaust port Sh,

— the change-over chamber being arranged to communicate with the exhaust chamber and containing a plunger movable between two positions, one PI1 permitting the flow, on the one hand from the distribution chamber or from the inlet port Er for the regenerative product towards the port C1 communicating with the inlet of the column, on the other hand from the port C2 towards the outlet of the column, the other, PI2 permitting the flow, on the one hand from the water distribution chamber or from the inlet port Er for the regenerative product towards the port C2, on the other hand, from the port C1 the exhaust chamber,

— the exhaust chamber containing a plunger movable between two positions, one PS1 permitting the flow from the change-over chamber towards the outlet port Se for processed water, the other, PS2 permitting the flow from the change-over chamber towards the outlet port Sr towards the sewer.

2. Device as set forth in claim 1, characterised in that the control means of the supply gate are adapted to move the aforesaid plunger and adjust them in the following configurations:

— PE1, PI1, PS1 corresponding to a configuration so-called normal working conditions,
— PE1, PI2, PS2 corresponding to a configuration so-called clearing conditions,
— PE2, PI1 or PI2, PS2 corresponding to one or the other so-called regenerating conditions and
— PE1, PI1, PS2 corresponding to a configuration so-called rinsing out conditions.

3. Device as set forth in claims 1 or 2, characterised in that the supply-gate comprises three parts, each containing a chamber and its associated plunger, one of these parts, called central part, being fitted perceptibly vertically at the top of the column by means of a neck, the two other parts being horizontally fitted on the central part along two radial directions.

4. Device as set forth in claim 3, characterised in that the hydro-injector is fitted on the central part of the supply-gate along a radial direction, and comprises an outlet port Hr for the diluated regenerative product, located over against an inlet port Er for the regenerative product, and an inlet port He for the driving water, connected by a pipe to the exhaust port Sh of one of the lateral parts.

5. Device as set forth in one of the claims 1, 2, 3 or 4, characterised in that the control means of the supply-gate comprise a hydraulic distributor with several outlet ports, adapted to distribute pression of water to the chambers of the gate, and comprising three obturating plungers, radially fitted with regards of a central cam-shaft, each obturating plunger being adapted, according to the angular position of the camshaft, to obturate an outlet port D1, respectively D2, D3, or, on the contrary, to free one of them and connect it up with an intake of waterpression, the three outlet ports D1, D2, D3 each cooperating with one of the obturating plungers, being respectively connected with inlet ports D'1, D'2, D'3 for hydraulic controls, located in the three chambers of the gate so as to drive the plungers.

6. Device as set forth in claim 5, characterised in that the inlet ports D'1, D'2, D'3 for the hydraulic controls are located at an extremity of the corresponding chambers so as to apply the water pression on one face of the corresponding plunger, the pression of the water to be processed or of the regenerative product crossing the gate being applied on the opposite face of the plunger, this face having a smaller section than the other, so as to draw back the plunger when the pression is cut at the corresponding inlet ports D'1, D'2, D'3 for controls.

7. Device as set forth in claims 2 and 6 as a whole, characterised in that the cam-shaft of the hydraulic distributor is adapted to take four successive angular positions, at each position corresponding a configuration for the three obturating plungers of the distributor, at each configuration for the obturating plungers corresponding the following positions for the plungers of the gate:

— PE1, PI1, PS1 so-called normal working configuration,
— PE1, PI2, PS2 so-called clearing configuration,
— PE2, PI1, PS2 so-called co-current regenerating configuration and
— PE1, PI1, PS2 so-called rinsing out configuration.

8. Device as set forth in claims 2 and 6 as a whole, characterised in that the cam-shaft of the hydraulic distributor is adapted to take four successive angular positions, at each position corresponding a configuration for the three obturating plungers of the distributor, at each configuration for the obturating plungers corresponding the following positions for the plungers of the gate:

— PE1, PI1, PS1 so-called normal working configuration,
— PE1, PI2, PS2 so-called clearing configuration,
— PE2, PI2, PS2 so-called counter-current regenerating configuration and
— PE1, PI1, PS2 so-called rinsing out configuration.

9. Device as set forth in one of the claims 5, 6, 7 or 8, characterised by a manual control mean rigidly locked with the cam-shaft so as to permit a manually drived rotation of the cam-shaft from a position to the following.

10. Device as set forth in one of the claims 5, 6, 7, 8 or 9, characterised by a consol on which is located the distributor and which is fastened at the processing column.

11. Unit for eliminate minerals in water, comprising at least two columns, one containing a cationinic resin, the other containing an annionic resin, characterised in that each column is fitted out with a control device as set forth in one of the claims 1, 2, 3, 4, 5, 6, 7, 8, 9 or 10, the water inlet port Ee of one of the devices being connected with the supply of water to be processed, while the water exhaust port Se of this device is connected with the water inlet port E'e of the other device, the water exhaust port S'e of which is connected with the canalisation for the users.

**Patentansprüche**

1. Bedienungseinrichtung für die Zuführung und die Abführung einer Wasser- oder Flüssigkeitbereitungsaüle, besonders eine Saüle um Mineralien abzusetzen, die Ionen wechselnde Harze enthalt, diese einrichtung umfassend einen zentraliesierten Verteilungsschieber, der die Form eine an dem Saülekopfende befestigte kompakte Einheit weist, Bedienungsmittels für den Verteilungsschieber, und eine mit Wasser gespeiste Wassereinspritzdüse um einen regenerierenden Stoff zu saugen, diese Bedienungseinrichtung dienend zu der Zuführung und der Abführung von Wasser oder regenerierendem Stoff während normaler Leistungbereich soweit wei regenerierenden Leistungbereich, dadurch gekennzeichnet, dass der Verteilungsschieber aus drei Binnenraüme besteht:

— ein Raum, Wasserverteilungsraum genannt, worin eine Öffnung Ee für die Zuführung des zu bereiten Wassers mundet und woraus eine Öffnung Sh für die mit Wasser Speisung von der Wassereinspritzdüse öffnet,

— ein zweiter Raum, Richtungumkehrungsraum genannt, worin einerseits eine mit der Wassereinspritzdüse kommuniezierende Öffnung Er für die Zuführung des regenerierenden Stoff mundet, anderseits eine mit der Wassereintritt der Saüle kommuniezierende Öffnung C1 und eine mit der Wasseraustritt der Saüle kommuniezierende Öffnung C2 um in eine oder die andere Richtung der Durchgang des Wassers oder des regenerierenden Stoffes zwischen den Shieber und die Saüle zu ermöglichen, öffnen,

— ein dritter Raum, Abführungsraum genannt, woraus eine für das bereitete Wasser Öffnung Se und eine für nach dem Abzugkanal Wasserabführungsöffnung Sr öffnen,

— der Wasserverteilungsraum kommuniezierend mit dem Richtungumkehrungsraum und enthaltend einen Kolben, der zwischen zwei Lagen, die eine PE1 den Durchgang des Wassers aus der Öffnung Ee zu dem Richtungumkehrungsraum ermöglichend, die andere PE2 den Durchgang des Wassers zu der Öffnung Sh ermöglichend, beweglich wird,

— der Richtungumkehrungsraum kommuniezieren mit dem Abführungsraum und enthaltend einen Kolben, der zwischen zwei Lagen, die eine PI1 den Durchgang einerseits aus dem Wasserteilungsraum oder aus der Öffnung Er für die Zuführung des regenerierenden Stoff zu der mit der Wassereintritt der Saüle kommuniezierende Öffnung C1, andererseits aus der mit der Wasseraustritt der Saüle kommuniezierende Öffnung C2 zu dem Abführungsraum ermöglichend, die andere PI2 den Durchgang einerseits aus dem Wasserverteilungsraum oder aus der Öffnung Er für die Zuführung des regenerierenden Stoff zu der Öffnung C2, andererseits aus der Öffnung C1 zu den Abführungsraum ermöglichend, beweglich wird,

— der Abführungsraum enthaltend einen Kolben, der zwischen zwei Lagen, die eine PS1 den Durchgang aus dem Richtungumkehrungsraum zu der für das bereitete Wasser Öffnung Se ermöglichend, die andere PS2 den Durchgang aus dem Richtungumkehrungsraum zu der nach dem Abzugkanal Öffnung Sr ermöglichend, beweglich wird.

2. Einrichtung nach Anspruch 1, dadurch gekennzeichnet, dass die Bedienungsmittels für den Verteilungsschieber die Bewegung der drei Kolben bedienen und sie in die drei folgenden Gestaltungen setzen:

— PE1, PI1, PS1 entsprechend mit einer genannten normale Leistungsbereichgestaltung,
— PE1, PI2, PS2 entsprechend mit einer genannten Ausschlämmungsgestaltung,

— PE2, PI1 oder PI2, PS2 entsprechend mit genannten Regenerationsgestaltung,
— PE1, PI1, PS2 entsprechend mit einer genannten Spülengestaltung.

3. Einrichtung nach Anspruch 1 oder 2, dadurch gekennzeichnet, dass der Verteilungsschieber aus drei jedem einen Raum mit seinem Kolben enthaltend Körper besteht, die drei Körper begreifend einen in einer wahrnemlich senkrechten Weise durch einen Hals und Einstellungen an dem Kopfende der Saüle befestigten Zentralkörper und zwei folgend zwei radiale Richtungen in einer waagerechten Weise an dem Zentralkörper befestigte Seitenkörper.

4. Einrichtung nach Anspruch 3, dadurch gekennzeichnet, dass die Wassereinspritzdüse folgend eine radiale Richtung an dem Zentralkörper des Schiebers befestigt wird und zwei Öffnungen weist, die eine Hr für die Abführung des aufgelösten regeneriernden Stoffes die sich gegenüber der Öffnung Er des Zentralkörper für die Zuführung des regenerierenden Stoffes findet und die andere He für die Zuführung des treibenden Wassers die durch einen Röhre mit der Öffnung Sh eines Seiten körpers verbindet wird.

5. Einrichtung nach Anspruch 1, 2, 3 oder 4, dadurch gekennzeichnet, dass die Bedienungsmittels für den Verteilungsschieber einen Wasserverteiler umfasst der den Wasserdruck in dem Schieberraum verteilt und der drei verschliessende, folgend eine radiale Richtung in bezug auf eine zentrale Nockenwelle angeornete Kolben enthält, do dass in einer abhängigen Weise von der Winkliglage der Nockenwelle, jeder Kolben eine Öffnung D1, D2 oder D3, die mit einem Wasserbedienungseintritt D'1, D'2, D'3 in den drei Schieberräume um die Kolben mitzunehmen verbindet sind, verschliesst, oder mit einer Wasserdruckentnahme verbindet.

6. Einrichtung nach Anspruch 5, dadurch gekennzeichnet, dass jede Wasserbedienungseintritt D'1, D'2, D'3 an einer Raumende öffnet um den Wasserdruck auf einer Seite des Kolbens zu applizieren, während der Druck des zu bereiten Wassers oder des regenerierenden Stoffes auf der anderen kleineren Kolbenseite appliziert wird um eine Rückkehr des Kolbens zu bekommen wenn der Druck an der Bedienungseintritt D'1, D'2 oder D'3 unterbrochen wird.

7. Einrichtung nach Ansprüche 2 und 6 zusammen, dadurch gekennzeichnet, dass die Nockenwelle des Wasserverteilers vier Winkliglagen nimmt, wobei die drei verschliessenden Kolben des Verteilers die Schieberkolben bedienen um die vier folgenden Gestaltungen zu bekommen:

— PE1, PI1, PS1 (normaler Leistungsbereichgestaltung)
— PE1, PI2, PS2 (Ausschlämmungsgestaltung)
— PE1, PI1, PS2 (Mitströmmung Regenerationgestaltung)
— PE1, PI1, PS2 (Spülengestaltung).

8. Einrichtung nach Ansprüche 2 und 6 zusammen, dadurch gekennzeichnet, dass die Nockenwelle des Wasserverteilers vier Winkliglagen nimmt, wobei die drei verschliessenden Kolben des Verteilers die Schieberkolben bedienen um die vier folgenden Gestaltungen zu bekommen:

— PE1, PI1, PS1 (normaler Leistungsbereichgestaltung)
— PE1, PI2, PS2 (Aussclämmungsgestaltung)
— PE2, PI2, PS2 (Gegenströmmung Regenerationgestaltung)
— PE1, PI1, PS2 (Spülengestaltung).

9. Einrichtung nach Anspruch 5, 6, 7 oder 8, dadurch gekennzeichnet, dass die Nockenwelle durch ein Handmittel von eine Lage zu der folgenden gedreht wird.

10. Einrichtung nach Anspruch 5, 6, 7, 8 oder 9, dadurch gekennzeichnet, dass der Wasserverteiler auf einer an der Saüle befestigten Konsole angeordnet ist.

11. Apparat für der Abzusetzung von Mineralien aus Wasser, umfassend mindestens zwei Saülen, die eine Kationisches Harz enthaltend, die andere anionnisches Harz enthaltend, dadurch gekennzeichnet, dass jede Saüle eine Bedienungseinrichtung nach einer der Ansprüche 1, 2, 3, 4, 5, 6, 7, 8, 9 oder 10 umfasst, wobei die Wassereintrittöffnung Ee der ersten Einrichtung mit der zu bereiten Wasserableitung, die Wasseraustrittöffnung Se der ersten Einrichtung mit der Wassereintrittöffnung E'e der folgenden Einrichtung, und die Wasseraustrittöffnung S'e der letzten Einrichtung mit der Ausnutzungskanalisation verbindet werden.

Fig. 1

Fig.2

Fig. 3

0006 409

Fig. 4

Fig. 5

D₁

D₃

12

48

46

44

47

D₂

10

11

c

c

Fig. 7

D'₂

PE₂

P₂

PS₂

D'₁

D'₃

Sh

Sr

C₁

C₂

Fig. 6a

Fig. 6b

Fig. 6c

Fig. 6d